# EUROPÄISCHE PATENTSCHRIFT

(11) **EP 1 333 051 B1**
(45) Veröffentlichungstag und Bekanntmachung des Hinweises auf die Patenterteilung: **15.02.2006**
(21) Anmeldenummer: 02027251.4
(22) Anmeldetag: 06.12.2002
(51) Int. Cl.: C08J 9/14, C08J 9/00, C08L 81/06

(54) **Verfahren zur Herstellung von Schaumstoffbahnen aus hochtemperaturbeständigen Polysulfonen oder Polyethersulfonen**
Process for making high temperature resistant foam sheets of polysulfones or polyethersulfones
Procédé de fabrication de plaques de mousse en polysulfone ou polyéthersulfone, résistant à des températures élevées

(30) Priorität: 20.12.2001 DE 10162602
(43) Veröffentlichungstag der Anmeldung: 06.08.2003
(73) Patentinhaber: BASF Aktiengesellschaft, 67056 Ludwigshafen (DE)
(72) Erfinder: Dietzen, Franz-Josef, Dr., 67454 Hassloch (DE); Scherzer, Dietrich, Dr., 67433 Neustadt (DE); Queisser, Joachim, Dr., 68165 Mannheim (DE); Rück, Swen, 67549 Worms (DE); Ehrmann, Gerd, Dr., 67146 Deidesheim (DE); Kratzmüller, Wolfgang, 97941 Tauberbischofsheim (DE)

(56) Entgegenhaltungen:
- US-A- 4 275 186
- US-A- 5 017 622

## Beschreibung

Die Erfindung betrifft ein Verfahren zur Herstellung von Schaumstoffbahnen aus einem hochmolekularen und einem niedermolekularen Polysulfon oder Polyethersulfon durch Extrusion einer Mischung des Thermoplasten mit 1 bis 10 Gew.-% eines flüchtigen Treibmittels unter Druck und Auspressen an die freie Atmosphäre.

Ein derartiges Verfahren ist in DE-A-4 207 057 beschrieben. Als Treibmittel werden dort sauerstoffhaltige aliphatische Flüssigkeiten, wie Alkohole, Ketone, Ester und Ether, insbesondere Aceton eingesetzt. Dabei tritt jedoch das Problem auf, dass die Anwendung solcher leicht brennbarer Flüssigkeiten bei den hohen Temperaturen ein erhebliches Sicherheitsrisiko darstellt.

Der Erfindung lag daher die Aufgabe zugrunde, dieses Risiko zu vermeiden oder wenigstens zu vermindern.

Diese Aufgabe wird erfindungsgemäß dadurch gelöst, dass als Treibmittel Wasser oder eine Mischung von Wasser mit bis zu 200 Gew.-Teilen, bezogen auf 100 Gew.-Teile Wasser, eines inerten Gases oder einer organischen Flüssigkeit als Co-Treibmittel eingesetzt wird.

Treibmittel ist Wasser sowie Mischungen mit folgenden Co-Treibmitteln
- inerte Gase, wie CO₂, Stickstoff, Argon,
- Kohlenwasserstoffe, wie Propan, Butan, Pentan, Hexan,
- aliphatische Alkohole, wie Methanol, Ethanol, Propanol, Isopropylalkohol, Butanol,
- aliphatische Ketone, wie Aceton oder Methylethylketon,
- aliphatische Ester, wie Methyl- oder Ethylacetat,
- fluorierte Kohlenwasserstoffe (z.B. 134a, 152a),
- deren Mischungen.

Besonders bevorzugt ist Wasser, sowie Mischungen von Wasser mit bis zu 100 Gew.-Teilen, bezogen auf 100 Gew.-Teile Wasser, eines Alkohols oder eines Keton mit einem Siedepunkt zwischen 50 und 100°C.

Die Treibmittel werden in Mengen von 1 bis 10 Gew.-%, vorzugsweise von 2 bis 8 Gew.-%, bezogen auf den Thermoplasten, angewandt. Es können übliche Hilfsstoffe, z.B. Nucleierungsmittel, zur Regulierung der Zellzahl zugesetzt werden.

Überraschenderweise hat sich gezeigt, dass Schaumstoffbahnen mit besonders niedriger Dichte erhalten werden, wenn man als Polymer eine Mischung aus einem hochmolekularen und einem niedermolekularen Polysulfon bzw. Polyethersulfon einsetzt, vorzugsweise im Mischungsverhältnis 5 : 1 bis 1 : 5. Dabei ist bevorzugt die Fließfähigkeit MVR 360°C/10 kg nach ISO 1133 des hochmolekularen Polymeren kleiner als 75 [cm³/10 min] und die des niedermolekularen Polymeren größer als 80 [cm³/10 min].

Das erfindungsgemäße Verfahren wird vorzugsweise auf einer Anlage durchgeführt, die aus zwei Extrudern besteht. Im ersten Extruder wird zunächst der Thermoplast bei einer Temperatur oberhalb seiner Glastemperatur aufgeschmolzen, dann wird unter Druck das Treibmittel in die Schmelze eingepresst und mit dieser homogen vermischt, wobei die Glastemperatur der Mischung absinkt. Im zweiten Extruder wird die Mischung auf eine Temperatur abgekühlt, bei der die Viskosität der Schmelze noch ausreichend hoch ist um einen guten Schaum zu bilden. Schließlich wird die Mischung an die freie Atmosphäre ausgepresst, wobei sie aufschäumt. Bei Verwendung einer Breitschlitzdüse erhält man Schaumstoffplatten, die vorzugsweise eine Dicke von 0,5 bis 8 cm und eine Dichte von 30 bis 100 g/l aufweisen.

Die im Beispiel genannten Produkte sind Gewichtsprozente.

### Beispiel 1

Die Schaumstoffproben wurden auf einer Tandemananlage extrudiert. Diese besteht aus einem Aufschmelzextruder und einem Kühlextruder.

Ein Polyethersulfon (ULTRASON 2010 der BASF AG) wird dem ersten Extruder zugeführt. Das Polymer wird aufgeschmolzen und das Treibmittel oder die Mischung der Treibmittel wird eingespritzt und dann in die 340°C heiße Schmelze eingemischt. Die treibmittelhaltige Schmelze wird dann im zweiten Extruder auf die zum Schäumen notwendige Temperatur (s. Tabelle) abgekühlt. Nach dem Austritt aus einer Schlitzdüse schäumt die Schmelze auf und wird in einer Kalibriervorrichtung zu Platten geformt.

| Versuch | H₂O (%) | Aceton (%) | T-Sch (°C) | Dicke (mm) | Dichte (g/l) |
|---|---|---|---|---|---|
| 1 | | 5 | 246,5 | 11 | 46 |
| 2 | 1 | 4 | 249,1 | 11 | 43 |
| 3 | 2 | 3 | 249,4 | 10 | 46 |
| 4 | 2 | 2 | 248,7 | 10 | 52 |
| 5 | 3 | 1 | 248,1 | 10 | 63 |
| 6 | 2 | | 243,8 | 10 | 82 |
| 7 | 2 | | 247,8 | 10 | 124 |
| 8 | 1,5 | | 250,2 | 10 | 178 |

Die Versuche 1 und 2 sind nicht erfindungsgemäß.

### Beispiel 2

Wie in Beispiel 1 beschrieben, wurden Schaumplatten aus Polyethersulfon hergestellt. Anstelle eines Typs wurde eine Mischung aus einem leicht fließenden, niedrigviskosen PES (niedriges Molekulargewicht) und einem schlecht fließenden, hochviskosen PES (hohes Molekulargewicht) verschäumt.

Bei den eingesetzten Produkten handelt es sich um PES E1010, E2010 und E3010 der BASF.

Die Fließfähigkeit dieser Produkte ist durch folgende MFR Werte beschrieben.

| | MVR 360°C/10 Kg (cm³/10 min) ISO 1133 |
|---|---|
| E1010 | 150 |
| E2010 | 77 |
| E3010 | 40 |

Die Mischung der Typen, die sich durch eine breite Molekulargewichtsverteilung auszeichnen, lässt sich mit Wasser als einzigem Treibmittel zu niedrigeren Dichten verschäumen, als die Einzelkomponenten.

| E1010 (%) | E2010 (%) | E3010 (%) | H₂O (%) | Dichte (g/l) |
|---|---|---|---|---|
| 100 | | | 3 | 84 |
| | 100 | | 3 | 82 |
| | | 100 | 3 | 98 |
| 67 | | 33 | 3 | 66 |

## Patentansprüche

1. Verfahren zur Herstellung von Schaumstoffbahnen durch Extrusion einer Mischung aus einem Polysulfon oder Polyethersulfon und 1 bis 10 Gew.-%, bezogen auf den Thermoplasten, eines flüchtigen Treibmittels unter Druck bei Temperaturen oberhalb von 300°C und Auspressen an die freie Atmosphäre, wobei das Treibmittel Wasser oder eine Mischung von Wasser mit bis zu 200 Gew.-Teilen, bezogen auf 100 Gew.-Teile Wasser, eines inerten Gases oder einer organischen Flüssigkeit als Co-Treibmittel ist, **dadurch gekennzeichnet, dass** eine Mischung aus einem hochmolekularem und einem niedermolekularen Polysulfon bzw. Polyethersulfon eingesetzt wird.

2. Verfahren nach Anspruch 1, **dadurch gekennzeichnet, dass** eine Mischung aus einem hochmolekularen und einem niedermolekularen Polysulfon bzw. Polyethersulfon im Verhältnis 5 : 1 bis 1 : 5 eingesetzt wird.

3. Verfahren nach Anspruch 1, **dadurch gekennzeichnet, dass** die Fließfähigkeit MVR 360°C/10 kg nach ISO 1133 des hochmolekularen Polymeren kleiner als 75 cm³/10 min und die des niedermolekularen Polymeren größer als 80 cm³/10 min ist.

4. Verfahren nach Anspruch 1, **dadurch gekennzeichnet, dass** das Treibmittel Wasser oder eine Mischung von Wasser mit bis zu 100 Gew.-Teilen, bezogen auf 100 Gew.-Teile Wasser, eines Alkanols oder eines aliphatischen Ketons mit Siedepunkt zwischen 50 und 100°C ist.

## Claims

1. A process for producing foam webs by extruding a mixture of a polysulfone or polyether sulfone and from 1 to 10% by weight, based on the thermoplastics, of a volatile blowing agent, under pressure at above 300°C into the open atmosphere, using, as blowing agent, water or a mixture of water with up to 200 parts by weight, based on 100 parts by weight of water, of an inert gas or of an organic liquid as co-blowing agent, wherein use is made of a mixture of a high-molecular-weight and a low-molecular-weight polysulfone or polyether sulfone.

2. The process according to claim 1, wherein use is made of a mixture of a high-molecular-weight and a low-molecular-weight polysulfone or polyether sulfone in a ratio of from 5:1 to 1:5.

3. The process according to claim 1, wherein the flowability MVR 360°C/10 kg to ISO 1133 of the high-molecular-weight polymer is below 75 cm³/10 min, and that of the low-molecular-weight polymer is greater than 80 cm³/10 min.

4. The process according to claim 1, wherein the blowing agent is water or a mixture of water with up to 100 parts by weight, based on 100 parts by weight of water, of an alkanol or of an aliphatic ketone with boiling point between 50 and 100°C.

## Revendications

1. Procédé de fabrication de bandes de mousse par extrusion d'un mélange à base de polysulfone ou de polyéthersulfone et de 1 à 10 % en poids, par rapport aux substances thermoplastiques, d'un agent gonflant volatil, sous pression, à des températures supérieures à 300°C, et par éjection à l'atmosphère libre, l'agent gonflant étant de l'eau ou un mélange d'eau avec jusqu'à 200 parties en poids, par rapport à 100 parties en poids d'eau, d'un gaz inerte ou d'un liquide organique comme coagent gonflant, **caractérisé en ce qu'**on met en oeuvre un mélange à base d'une polysulfone ou respectivement polyéthersulfone de haut poids moléculaire et d'une polysulfone ou respectivement polyéthersulfone de faible poids moléculaire.

2. Procédé suivant la revendication 1, **caractérisé en ce qu'**un mélange d'une polysulfone ou respectivement polyéthersulfone de haut poids moléculaire et d'une polysulfone ou respectivement polyéthersulfone de faible poids moléculaire est mis en oeuvre dans un rapport de 5/1 à 1/5.

3. Procédé suivant la revendication 1, **caractérisé en ce que** la fluidité MVR 360°C/10 kg selon la norme ISO 1133 du polymère de haut poids moléculaire est inférieure à 75 cm³/10 minutes et celle du polymère de faible poids moléculaire est supérieure à 80 cm³/10 minutes.

4. Procédé suivant la revendication 1, **caractérisé en ce que** l'agent gonflant est de l'eau ou un mélange d'eau avec jusqu'à 100 parties en poids, par rapport à 100 parties en poids d'eau, d'un alcanol ou d'une cétone aliphatique ayant un point d'ébullition entre 50 et 100°C.
